# EUROPEAN PATENT APPLICATION

(11) **EP 4 807 616 A1**
(43) Date of publication of application: **16.09.2026**
(21) Application number: 25163933.2
(22) Date of filing: 14.03.2025
(51) Int. Cl.: G06F 40/30, G06Q 10/0631, G06Q 10/0633, G06Q 10/20, G10L 15/04

(54) **METHOD AND SYSTEM FOR RECOMMENDING FOLLOW-UP ACTIONS IN TASK EXECUTION USING MULTIMODAL LEARNING**

(71) Applicant: British Telecommunications Public Limited Company, London E1 8EE (GB)
(72) Inventor: The designation of the inventor has not yet been filed
(74) Representative: British Telecommunications public limited company Intellectual Property Department

(57) **Abstract**

A method and system of recommending follow-up actions in a task execution process, the method comprising capturing language-based features from spoken comments made during task execution, acquiring visual data of the task environment using at least one sensor, processing the acquired visual data to detect and classify equipment-related and environment-related features, generating a structured representation of the task execution by combining the classified visual features with the captured language-based features, applying a trained learning model to analyse the structured representation and determine a recommended follow-up action based on learned correlations between prior task execution patterns and follow-up actions, and outputting the recommended follow-up action. The system comprises at least one sensor configured to acquire visual data, a speech recognition module for processing spoken comments, a data storage module for storing acquired data, and a processor configured to classify detected features, generate a structured representation of the task, apply a trained learning model, and output a recommended follow-up action.

## Description

### FIELD

The present disclosure relates to task execution and decision support systems, and more particularly but not exclusively to a method and system for recommending follow-up actions based on a combination of visual and language features captured during task performance.

### BACKGROUND

The execution and follow-up of complex tasks, particularly in engineering, maintenance, and industrial settings, present significant challenges due to the variability of task environments, evolving conditions, and reliance on human decision-making. Ensuring accurate task execution and determining the appropriate next steps often require expert knowledge, experience, and a detailed understanding of both the task context and surrounding environment. However, the process of assessing task outcomes and deciding on follow-up actions remains largely manual, subjective, and susceptible to inconsistencies, which can impact efficiency, safety, and reliability.

Conventionally, task execution relies on predefined procedures, checklists, and operator expertise to determine the necessary steps for completion. Workers or robots follow standard workflows, referring to prior documentation or domain-specific knowledge to interpret their observations and decide on subsequent actions. Current ways of assessing tasks often use digital tools such as inspection reports, maintenance logs, or diagnostic systems that help decide what to do based on past data. However, these methods have clear limits. For example, they follow fixed rules, do not easily adjust to new situations, and often miss the valuable know-how that comes from real-world experience.

One approach to improving task outcome assessment is the use of structured condition monitoring, where predefined thresholds trigger follow-up actions based on sensor readings or recorded observations. For example, an automated inspection system may flag a structural defect if a measurement exceeds a predefined tolerance. However, such threshold-based systems are rigid and lack an understanding of context, making them prone to false positives or negatives in complex, variable environments.

Another approach is predictive maintenance, where machine learning models analyse historical failure data to anticipate when a task or component requires intervention. Predictive models can help with decision-making in maintenance, but they typically rely on past failure patterns instead of looking at what is happening in real time. This means predictive models are unable to fully understand the details of a task or adapt well to new situations.

### SUMMARY

This invention arises from the realisation that existing solutions for guiding task execution and follow-up actions suffer from several key limitations. Rule-based approaches are rigid and do not generalise well to varying conditions. Structured monitoring systems require extensive predefined configurations that may not account for all real-world scenarios. Predictive models rely on historical trends rather than real-time interpretation, making them less effective in dynamic environments where situational awareness is crucial. Consequently, organisations often face inefficiencies, misinterpretations, and delays in decision-making, leading to increased operational costs and potential safety risks.

A problem to be solved is therefore the efficient and context-aware determination of follow-up actions in task execution without relying solely on predefined rules or manual interpretation. Existing approaches lack the ability to dynamically adapt to real-world conditions by integrating multimodal data sources, such as human language inputs and visual scene understanding, to infer appropriate next steps.

The present invention tends to address at least the above problems in the known art by providing a novel method for recommending follow-up actions based on a combination of visual and language-based task features. By leveraging Al-driven learning techniques, the present invention enables automated contextual analysis of task execution, capturing real-time speech remarks and environmental observations to determine optimal next steps. This approach tends to improve decision-making efficiency, reduce reliance on rigid preconfigured rules, and provide a scalable, adaptive solution for guiding human or robotic task execution across diverse operational environments.

Aspects of the invention relate to a computer-implemented method of learning and recommending follow-up actions in a task execution process using multimodal data from speech recognition and scene analysis, a data processing system configured to perform such a method, a computer program comprising instructions which, when executed by a computer, cause the computer to carry out such a method, a computer-readable data carrier having such a computer program stored thereon, and a data carrier signal carrying such a computer program.

The method comprises capturing and processing task-related spoken comments and visual scene data, extracting and classifying relevant features, learning correlations between task execution patterns and follow-up actions, and generating recommendations to guide subsequent steps in task completion.

The data processing system is configured to acquire multimodal task data, apply learning models to extract structured representations, classify detected features into predefined categories, and generate recommendations to optimise task workflow and efficiency.

The computer program, when executed, causes a computer to collect and process language and visual data, apply classification techniques to extract relevant task features, train a learning model to infer follow-up actions, and output recommended actions based on learned correlations.

The computer-readable data carrier may store the computer program, enabling deployment in automated task assistance systems, industrial maintenance platforms, or Al-powered workflow optimisation environments.

The data carrier signal may carry the computer program over a network, facilitating distributed task execution support, integration with cloud-based automation systems, or deployment in remote assistance applications.

According to a first aspect, there is provided a computer-implemented method as defined in the appended independent method claim. Further preferable features of the first aspect are defined in the appended dependent method claims.

According to a second aspect of the present invention there is provided a system as defined in the appended independent system claim. Further preferable features of the second aspect of the present invention are defined in any appended dependent method claims.

The method of the present invention tends to provide an efficient and adaptable approach to recommending follow-up actions in task execution. By leveraging a combination of language-based and visual task data, the method enables intelligent decision-making without requiring extensive manual input or predefined rule sets. The integration of structured representations of task execution allows for automated learning and adaptation, reducing reliance on rigid workflows and enhancing responsiveness to real-world conditions. Additionally, by processing sensor data and speech inputs without necessitating direct human supervision, the method streamlines task assessment while maintaining flexibility across various operational environments.

By combining visual data, spoken comments, and historical task execution records, the system of the present invention may generate informed, context-aware recommendations that improve task efficiency and consistency.

The at least one sensor may allow the system to acquire real-time visual data from the task environment (i.e., an environment in which the task is performed), ensuring that equipment conditions and environmental factors are accurately captured. The speech recognition module may process spoken comments from an operator or robotic system, extracting language-based features that provide additional insights into task execution, such as identified issues or procedural steps. The data storage module may maintain a structured record of captured features and historical task execution data, allowing the system to learn from past task patterns and refine its recommendations over time.

The processor tends to provide the computational capability to integrate and analyse multimodal data. By detecting and classifying equipment-related and environment-related features, the system may extract meaningful task execution details that influence decision-making. The structured representation of the task execution may serve as a unified format that combines classified visual and language-based data, ensuring that the system has a comprehensive understanding of the task.

By applying a learning model trained on historical task execution records, the system may identify patterns between past task conditions and their corresponding follow-up actions. This enables it to generate data-driven recommendations rather than relying solely on predefined rules. The ability to output the recommended follow-up action may allow seamless integration with operators, automated systems, or external task management platforms, ensuring that recommendations are effectively communicated and acted upon.

This approach tends to improve efficiency by reducing reliance on manual decision-making, adaptability by allowing the system to refine its recommendations based on new data, and accuracy by integrating multiple sources of information to generate well-informed follow-up actions.

Preferably, the step of capturing language-based features further comprises segmenting spoken comments into separate task-related statements and classifying each statement into predefined categories indicative of task actions, conditions, or outcomes.

Segmenting spoken comments into separate task-related statements and classifying them into predefined categories indicative of task actions, conditions, or outcomes tends to enable a structured and systematic approach to processing language-based inputs. By breaking down spoken remarks into discrete statements, the method can ensure that relevant information is efficiently captured and organised, reducing ambiguity and improving downstream analysis. The classification of statements into predefined categories may further enhance the ability of the system to interpret spoken input in a meaningful way, allowing it to distinguish between different aspects of task execution, such as operational steps, encountered issues, or environmental conditions.

Structured segmentation and classification tend to provide several technical advantages. Firstly, it may reduce the complexity of processing unstructured speech data by converting it into structured, analysable components. Secondly, it may improve the accuracy of task recognition by associating spoken comments with specific predefined categories rather than relying on free-text interpretation. Thirdly, it may facilitate efficient retrieval and comparison of similar task execution records by ensuring that language-based data is consistently formatted and categorised. Additionally, this method tends to enhance learning-based follow-up action recommendations by creating a well-defined input structure that can be effectively utilised by learning models. By standardising the processing of spoken remarks, the method supports automation, improves reliability, and minimises the risk of misinterpretation due to linguistic variability.

The step of processing the acquired visual data may further comprise detecting anomalies in the task environment by identifying deviations from predefined equipment condition thresholds.

Processing the acquired visual data to detect anomalies in the task environment by identifying deviations from predefined equipment condition thresholds tends to provide a systematic approach to recognising unexpected variations in task execution. By comparing observed equipment conditions to predefined thresholds, the method can determine whether a component is operating within expected parameters or exhibiting signs of wear, damage, or misalignment. This approach allows for real-time identification of deviations that may indicate faults, inefficiencies, or potential hazards.

Detecting anomalies based on predefined thresholds may provide several technical advantages. Firstly, it tends to reduce reliance on manual inspection by enabling automated detection of unexpected changes in equipment conditions. Secondly, it may enhance the accuracy and consistency of anomaly identification by using objective, quantifiable criteria rather than subjective human judgment. Thirdly, it may allow for early intervention by flagging deviations that exceed defined limits, helping to prevent operational failures before they escalate. Additionally, this method tends to support adaptive learning, as threshold values may be refined over time based on historical data, improving the ability of the system to detect emerging patterns of equipment degradation or environmental risks. By systematically identifying deviations from expected conditions, the method facilitates proactive decision-making, improves task execution efficiency, and supports predictive maintenance strategies.

Advantageously, the structured representation of the task execution is generated by combining classified features from multiple modalities, the multiple modalities comprising language-based features extracted from spoken remarks, equipment-related features extracted from visual data, and/or environment-related features extracted from visual data.

Generating the structured representation of task execution by combining language-based features from spoken remarks, equipment-related features from visual data, and/or environment-related features from visual data tends to create a more complete and accurate understanding of how a task is being performed. By using different types of data together, the method can provide a clearer picture of both what is happening and why, leading to better follow-up action recommendations.

Language-based features from spoken remarks may capture important details from human or robotic commentary, such as issues encountered, tools used, or decisions made during the task. Equipment-related features from visual data may provide objective information about the condition of a component, such as wear, damage, or misalignment. Environment-related features may help assess external factors like obstacles, terrain conditions, or the position of nearby structures.

By combining these different sources of information, the system may detect inconsistencies between what is reported and what is observed, improving accuracy and reducing errors. The structured representation may also adapt to different environments by using whatever data sources are available, making the method more flexible and widely applicable. This approach tends to enhance task monitoring, improve decision-making, and support automation in a variety of real-world settings.

Preferably, the learning model is trained using historical task execution records to identify patterns between the structured representation of the task execution and corresponding prior follow-up actions.

Training the learning model using historical task execution records to identify patterns between the structured representation of the task execution and prior follow-up actions tends to allow the system to make more informed and data-driven recommendations. By learning from past task executions, the model may recognise common situations, typical responses, and effective follow-up actions, improving the accuracy and relevance of its suggestions over time.

Using historical records may help the system understand which follow-up actions worked best in similar conditions, rather than relying solely on predefined rules. This approach may also allow the model to detect subtle patterns in how different factors, such as spoken comments, equipment conditions, and environmental factors, relate to specific follow-up actions.

By continuously improving its predictions based on real-world data, the method may reduce the need for human oversight, increase efficiency, and help operators make better decisions. It also tends to make the system more adaptable, as it can refine its recommendations based on evolving work patterns, new equipment, or changing environmental conditions.

Further advantageously, the learning model may be trained using supervised learning, wherein historical task execution data and corresponding recorded follow-up actions are used as labelled training data and/or unsupervised learning, wherein clustering is applied to structured representations of task execution patterns to inform follow-up actions.

Training the learning model using supervised learning and/or unsupervised learning tends to allow the system to improve its ability to recommend follow-up actions based on real-world task execution patterns. Supervised learning may enable the model to learn from labelled training data, where historical task execution records and their corresponding follow-up actions provide clear examples of what actions should be taken in similar situations. This approach may improve accuracy by reinforcing known patterns and ensuring that recommendations align with previously successful decisions.

Unsupervised learning, in contrast, may allow the system to recognise patterns without needing predefined labels. By applying clustering techniques to structured representations of task execution, the model may identify trends and group similar task patterns together, helping to inform follow-up actions even when explicit training data is unavailable. This approach tends to make the system more adaptable, particularly in environments where new situations arise frequently or where historical data is incomplete.

By using a combination of supervised and unsupervised learning, the method may improve both reliability and flexibility. It may refine recommendations based on known data while also identifying new or evolving trends, making the system more robust across different types of tasks and operational conditions.

Alternatively, the learning model may leverage large language model (LLM) or other generative artificial intelligence (GenAl) technique.

One or more recommended follow-up actions may be generated as a ranked list, the ranking being based on confidence scores assigned to each action.

Generating one or more recommended follow-up actions as a ranked list, where each action is assigned a confidence score, tends to improve the clarity and reliability of decision-making. Instead of providing a single follow-up action, the system may present multiple options, ranked according to how likely each action is to be the best choice based on learned patterns from past task executions.

By assigning confidence scores, the system can indicate how certain it is about each recommendation, allowing operators or automated processes to prioritise higher-ranked actions while still considering alternatives. This approach may reduce the risk of incorrect or suboptimal follow-up actions by ensuring that the most relevant options are presented first.

Ranking follow-up actions based on confidence scores may also make the system more flexible, as operators can review multiple options rather than being present only a single recommendation with no alternative. Additionally, this method may improve automation by allowing predefined thresholds to determine when an action should be taken automatically versus when human review is required.

The method disclosed herein may further comprise the step of updating the learning model based on operator feedback regarding the accuracy of a recommended follow-up action.

Updating the learning model based on operator feedback regarding the accuracy of a recommended follow-up action tends to improve the ability of the system to refine its predictions over time. By incorporating real-world feedback, the model may continuously adjust and learn from its past recommendations, making future suggestions more accurate and relevant to actual task execution conditions.

This feedback mechanism may allow the system to correct errors, reinforce successful recommendations, and adapt to changes in work processes, equipment conditions, or environmental factors. Rather than relying solely on historical data, the model may evolve based on direct input from users, ensuring that it stays aligned with current operational needs.

By integrating feedback into the learning process, the method may improve trust in the system, reduce the need for manual intervention, and enhance decision-making over time. Additionally, this approach tends to make the system more adaptable across different industries and use cases, as it can learn from domain-specific variations in how follow-up actions are executed and validated.

The method may further comprise generating a report of the extracted task execution features, corresponding classification results, and/or the recommended follow-up action.

Generating a report of the extracted task execution features, corresponding classification results, and/or the recommended follow-up action tends to provide a structured and interpretable record of the decision-making process. By compiling key data from the task execution, the report may offer valuable insights into how follow-up actions were determined, helping operators understand the reasoning behind the recommendations.

Including extracted task execution features may allow users to review the key data points that influenced the recommendation, such as detected equipment conditions, environmental factors, or spoken remarks. The corresponding classification results may provide further transparency by showing how the system categorised relevant information, making it easier to verify whether the classification aligns with real-world observations. The recommended follow-up action in the report may serve as a clear directive, allowing for manual review, automated logging, or integration into task management systems.

This reporting method may improve traceability and compliance by maintaining a structured record of decisions. It may also support performance analysis, as reports can be reviewed over time to assess the accuracy and effectiveness of recommendations. Additionally, generating reports tends to enhance operator confidence in the system by providing clear justifications for each recommended follow-up action.

Advantageously, there further comprises the step of transmitting the recommended follow-up action to a task management system and/or a remote-control centre for validation, logging, and/or automated execution.

Transmitting the recommended follow-up action to a task management system and/or a remote-control centre for validation, logging, and/or automated execution tends to enable seamless integration of the recommendations into existing operational workflows. By ensuring that follow-up actions are communicated directly to external systems, the method may improve efficiency, reduce manual input, and facilitate coordinated decision-making across different teams or locations.

Sending recommendations to a task management system may allow for structured tracking of actions, ensuring that each follow-up step is logged and monitored for completion. If the recommendation is sent to a remote-control centre, human operators may review and validate the action before execution, helping to maintain oversight in critical operations. Alternatively, when automated execution is enabled, the system may directly trigger the necessary actions, reducing response times and improving operational efficiency.

This approach tends to enhance traceability by creating a digital record of all recommended actions, making it easier to track outcomes and refine future recommendations. Additionally, transmitting follow-up actions to external systems may support large-scale automation, particularly in environments where rapid decision-making and real-time response are essential.

Preferably, there further comprises the step of initiating an automated task management workflow based on the recommended follow-up action, the workflow comprising one or more of scheduling maintenance work orders, dispatching necessary tools or equipment, and/or requesting regulatory approvals.

Initiating an automated task management workflow based on the recommended follow-up action tends to streamline operational processes by reducing the need for manual intervention. By automating key follow-up actions, the method may improve efficiency, ensure timely execution of tasks, and enhance coordination between different resources and personnel.

The workflow may include scheduling maintenance work orders, allowing necessary repairs or inspections to be assigned automatically based on detected task conditions. Dispatching necessary tools or equipment may ensure that the required resources are made available to operators, minimising delays caused by missing or inadequate equipment. Requesting regulatory approvals may facilitate compliance with safety or operational standards by automatically generating approval requests when required, helping to ensure that all necessary authorisations are obtained before critical tasks proceed.

By automating these workflow steps, the method may reduce administrative overhead, improve response times, and ensure that follow-up actions are carried out consistently and reliably. Additionally, this approach tends to support scalability, as automated workflows can be adapted to different operational environments, from industrial maintenance to regulatory compliance in highly controlled sectors.

Further preferably, the recommended follow-up action is adapted based on at least one of the operator's skill level, the complexity of the task, and/or environmental conditions affecting task execution, ensuring that less experienced users receive more detailed guidance, while experienced operators receive optimised instructions.

Adapting the recommended follow-up action based on the skill level of the operator, the complexity of the task, and/or environmental conditions affecting task execution tends to make the system more flexible and responsive to real-world variations. By tailoring recommendations to specific conditions, the method may improve usability, ensure that follow-up actions are appropriate for the situation, and enhance overall task efficiency.

Adjusting the recommendation based on operator skill level may ensure that less experienced users receive more detailed guidance, while experienced operators receive only essential instructions, reducing unnecessary steps. Considering task complexity may allow the system to provide more comprehensive recommendations for intricate procedures, while simpler tasks may require only minimal follow-up. Factoring in environmental conditions may help account for variables such as extreme temperatures, restricted spaces, or hazardous surroundings, ensuring that recommended actions remain practical and safe under different circumstances.

By dynamically adapting recommendations, the method may improve decision-making, make decisions easier for operators, and enhance system trust. This approach also tends to support a wider range of users and task environments, making the system more broadly applicable across different industries and operational settings.

The method may further comprise dynamically updating the structured representation of the task execution in real-time as new task-related data, including sensor readings and operator inputs, is acquired.

Dynamically updating the structured representation of task execution in real-time as new task-related data, including sensor readings and/or operator inputs, is acquired tends to ensure that the system remains responsive to changing conditions. By continuously refining the structured representation, the method may improve the accuracy and relevance of recommended follow-up actions, allowing the system to adapt as new information becomes available.

Incorporating real-time sensor readings may help detect changes in equipment conditions or environmental factors as a task progresses, ensuring that recommendations remain aligned with the current state of the task. Integrating operator inputs may allow for human feedback or adjustments, ensuring that the system accounts for context-specific knowledge that sensors alone may not capture. This dynamic updating may help prevent outdated or incorrect recommendations, particularly in tasks where conditions can change rapidly.

By maintaining an up-to-date structured representation, the method tends to improve decision-making, enhance predictive capabilities, and ensure that follow-up actions are based on the most current and accurate data. This approach may also support adaptive learning, as continuously updated task representations can contribute to refining future recommendations and improving long-term system performance.

The recommended follow-up action may be presented via an augmented reality (AR) display, a heads-up display (HUD), and/or another visual interface to assist a user in executing the task in real time.

Presenting the recommended follow-up action via an augmented reality (AR) display, a heads-up display (HUD), and/or another visual interface tends to enhance user interaction by providing real-time, context-aware guidance without disrupting task execution. By delivering recommendations directly into the user's field of view, the method may improve efficiency, reduce cognitive load, and ensure that operators can access critical information without needing to refer to separate screens or manuals.

An AR display may overlay task-specific information onto the real-world environment, allowing users to visualise key details such as equipment status, detected anomalies, or step-by-step instructions. A HUD may provide a hands-free way to access recommendations, particularly in situations where operators need to focus on complex tasks or maintain situational awareness. Using other visual interfaces, such as wearable devices or projected displays, may ensure adaptability to different work environments and user preferences.

By integrating follow-up actions into an intuitive and easily accessible display format, the method may reduce delays in task execution, improve user adherence to recommendations, and enhance safety by allowing operators to keep their attention on the task at hand. This approach also tends to support applications in fieldwork, maintenance, and industrial settings where real-time guidance is essential for accuracy and efficiency.

A data processing system may be configured to perform the method disclosed herein.

A computer program may be provided comprising instructions which, when the program is executed by a computer, cause the computer to carry out the method of any disclosed herein. Furthermore, a computer-readable data carrier may be provided having stored thereon said computer program. A data carrier signal may also be provided carrying said computer program.

### BRIEF DESCRIPTION OF THE FIGURES

Aspects of the present disclosure will now be described by way of example with reference to the accompanying figures. In the figures:
Figure 1 Illustrates the system architecture disclosed herein in a block diagram form, showing the key components involved in data acquisition, processing, recommendation generation, and feedback learning; and
Figure 2 outlines the step-by-step sequence of operations performed by the system disclosed herein, in generating and refining follow-up action recommendations.

### DETAILED DESCRIPTION

The present disclosure relates to a system and method for recommending follow-up actions in a task execution process. The method leverages a combination of spoken language inputs, visual data analysis, and learning techniques to generate structured recommendations that improve task efficiency and accuracy. The invention addresses the challenge of inconsistent and inefficient decision-making in complex task environments by automating follow-up action recommendations, reducing reliance on manual assessments and improving response times.

As used herein, the term 'task' refers to an operational activity performed on or involving an object or piece of equipment. Examples of tasks include, but are not limited to, the installation, inspection, maintenance, or repair of physical infrastructure, machinery, or other technical equipment. The task execution process may be carried out by a human operator or a robotic system and is monitored through a combination of language-based inputs and visual data analysis to determine appropriate follow-up actions

The proposed method is divided into four stages: (1) importing task and feature data, (2) recognising and storing language-based features, (3) detecting and classifying visual features, and (4) learning follow-up actions based on the combined data. Each stage contributes to the overall ability of the system to provide accurate and context-aware recommendations.

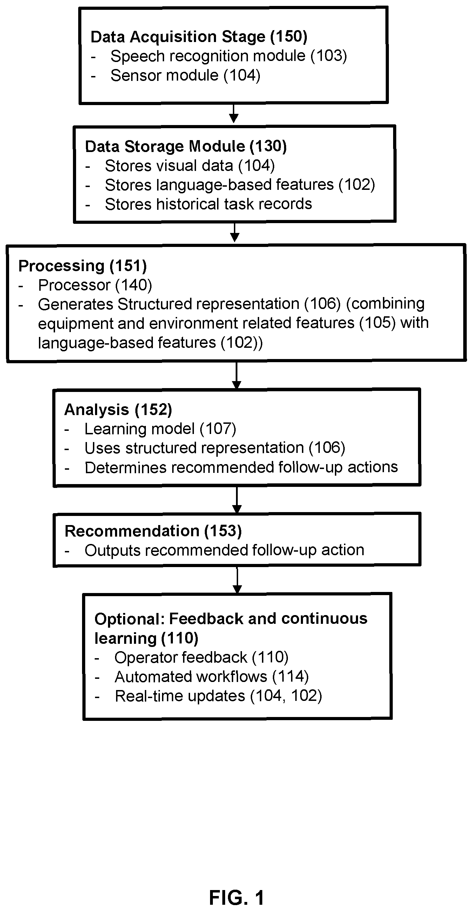

Referring to Figure 1, the system architecture is depicted in a block diagram, showing the key components involved in data acquisition, processing, recommendation generation, and feedback learning. Figure 1 illustrates the sequential stages of acquiring data, processing task-related information, generating follow-up recommendations, and continuously refining future recommendations based on real-time operator feedback and updated sensor inputs.

The process begins with the Data Acquisition Stage (150), where information is gathered from various sources. A task data input module (101) receives details regarding the task type, the object or equipment involved, and relevant environmental attributes. Simultaneously, a speech recognition module (103) captures spoken comments from an operator or robotic system, while a sensor module (104) acquires visual data from cameras, LiDAR, or other environmental sensors. These inputs are processed and structured to provide a detailed representation of the task execution environment. A processing unit (140) is responsible for integrating these inputs into a unified dataset for further analysis, this unification may be driven by a LLM or other GenAl technique.

The system then transitions into the Processing (151), Analysis (152), and Recommendation (153) stages, which may leverage LLM or other GenAl techniques. Once the structured representation (106) is generated, the system progresses to the Analysis (152) stage, where a learning model (107), may use Machine Learning (ML) or be driven by LLM or other GenAl techniques, detects patterns and correlations between task conditions and prior follow-up actions.

During this stage, the system also checks for anomalies by comparing observed features against predefined thresholds, allowing for early identification of deviations that may impact task execution. The system uses a data storage module (130), which retains historical task execution data for training and refining decision-making capabilities. Based on the analysed data, a follow-up action generation module (108), may leverage LLM or other GenAl techniques determines appropriate recommendations, which are ranked by a confidence score assignment module (109), may leverage LLM or other GenAl techniques before being displayed via an output and display module (115, 116, 117). The system continuously improves by learning from feedback. Operators can review and confirm recommendations using a feedback module (110), while automated workflows (114), may leverage LLM or other GenAl techniques, carry out approved actions. This process helps the system get better over time by refining its predictions based on real-world results.

To reiterate, the task execution process begins with receiving task data (101), which includes information about the type of task being performed, the object or equipment involved, and relevant static and dynamic attributes. The task type may include, but is not limited to, inspection, installation, maintenance, and repair tasks. These tasks may involve different levels of complexity, from routine checks to complex fault diagnostics requiring machine learning-based decision support. The attributes may include structural properties, operational history, and environmental factors that influence task execution. The system captures spoken comments (102) made by an operator or a robotic system during task execution. Since task execution is an ongoing process, language-based features are captured dynamically throughout its duration, allowing real-time updates and corrections to be made. These comments are processed using a speech recognition module (103), segmenting them into separate task-related statements and classifying them into predefined categories indicative of actions, conditions, or outcomes or may leverage LLM or other GenAl techniques. This structured classification enables the system to interpret and utilise language-based inputs effectively.

Simultaneously, the system acquires visual data of the task environment, including the object or equipment being worked on, surrounding structures, and external conditions that may influence task execution, using one or more sensors (104). These sensors may include cameras, LiDAR, or environmental monitoring devices that detect equipment conditions and surrounding features. The acquired visual data is processed to detect and classify relevant features (105), identifying equipment-related and environment-related conditions, this process may leverage LLM or other GenAl techniques. The system may further detect anomalies by comparing observed features of the task environment and equipment conditions against predefined thresholds, identifying any deviations that may require follow-up actions. If a detected condition deviates from expected parameters, the system may flag it as an anomaly requiring further action, this process may leverage LLM or other GenAl techniques.

A structured representation (106) of the task execution is generated, integrating classified equipment-related and environment-related features with the processed language-based features. This representation provides a holistic view of the task state and serves as the basis for further analysis and decision-making. This structured representation (106) serves as an integrated dataset that allows the system to correlate various types of task execution data.

The structured representation (106) can be mathematically represented as follows: $FS \left[X\right] \times DMF \left[X\right] \times T \left[X\right] \to FA \left(n, n\right)$ where:
- *F*S*[X*] represents the static features of the equipment,
- *DMF*[*X*] represents the digital model of the task scene based on visual data,
- *T*[*X*] represents the language-based feature vector,
- *FA*(*n, n)* represents the recommended follow-up action.

By applying the learning model (107) that analyses on historical task execution records stored in the data storage module (130), the system analyses patterns between past conditions and corresponding follow-up actions (108). These historical task execution records include previous instances of similar tasks, allowing the system to learn from past experiences and refine follow-up action recommendations. This enables the system to predict likely task outcomes based on contextual similarities. The learning model is trained using supervised learning, where historical task data is labelled with corresponding follow-up actions, and/or unsupervised learning, where clustering techniques identify patterns without explicit labels. Alternatively, the learning model (107) may leverage LLM or other GenAl techniques.

To detect anomalies in equipment and environmental conditions, the system uses classifier methods (CMO and CME) to map measured feature values into discrete categories. For example, if *FV1*[*X*] represents pole dent size and *FV*2[*X*] represents pole inclination, a classifier function maps these values as follows:
- CMO classifies a measured value *FV**1[*X*] *= 3cm* to be in C12 within the set of possible classes *C*1* = {*C*11 = *dent* < *2cm deep, C*12 *=* 2*cm < dent* < *4cm deep, C*13 *= dent > 4cm deep},* that is *FV**1[*X*] → *C12*
- CMO classifies a measured value *FV**2[*X*] = 20° to be in C23 within the set of possible classes *C2** = {*C*21 = *inclination <* 5°, *C*22 = 5° < *inclination <* 15°, *C*23 *= inclination* > 20°}, that is *FV**2[*X*] → *C*23

Similarly, environmental conditions such as proximity to a manhole or fence may be classified as follows:
- CME classifies a measured value *GV**1[*X*] = 2m to be in D12 within the set of possible classes *D*1* = {*D*11 = *manhole* < 1*m, D*12 *= manhole within* 3*m*, *D*13 *= manhole* > 3*m*}, that is *GV**1[*X*] → *D*12
- CME classifies a measured value *GV**2[*X*] = 2*m* to be in *D*22 within the set of possible classes *D*2*** = {*D*21 *= fence* < 1*m, D*22 *= fence within* 3*m*, *D*23 *= fence* > 3*m*}, that is *GV*2*[*X*] → *D*22

The structured representation *DMF*[*X*] = {*C*12, *C*23, *D*12*, D*23} is then used as an input to the learning process to generate a follow-up action recommendation *FA* (*n, n*).

Alternative implementations of the system may use a rule-based decision tree instead of a machine learning model for determining follow-up actions. In such an embodiment, predefined logical rules would be applied to classify task execution conditions and determine appropriate responses based on historical trends and static thresholds. Alternative implementations may use LLM or other GenAl techniques to determine follow-up actions. Additionally, the system may integrate additional sensor types such as ultrasonic or thermal imaging to enhance the accuracy of visual data analysis.

The system generates one or more recommended follow-up actions (108) as a ranked list, assigning confidence scores (109) to each action. This ranking mechanism ensures that the most relevant and reliable actions are prioritised while allowing operators to consider alternative options. The model may be continuously updated based on operator feedback (110) regarding the accuracy of recommended actions, improving the ability of the system to refine predictions over time.

A structured report (111) is generated to summarise extracted task execution features, classification results, and recommended follow-up actions. This report may be transmitted to a task management system (112) and/or a remote-control centre (113) for validation, logging, or automated execution. Additionally, the system may initiate automated workflows (114), including scheduling maintenance work orders, dispatching necessary tools or equipment, or requesting regulatory approvals.

To ensure real-time adaptability, the structured representation of task execution (106) is dynamically updated as new sensor readings (104) and operator inputs (102) are acquired. This continuous updating process enhances the accuracy and timeliness of follow-up actions. Furthermore, recommendations may be presented through augmented reality (AR) displays (115), heads-up displays (HUDs) (116), or other visual interfaces (117), allowing users to access real-time guidance without interrupting task execution.

The system comprises at least one sensor (104) to acquire visual data, a speech recognition module (103) to process spoken comments (102), a data storage module (130) to retain historical execution records, and the processor (140) to integrate and analyse these inputs. The processor (140) applies learning techniques, for both visual and speech features such learning techniques may include ML and/or LLM and/or other GenAl techniques. to detect and classify task execution features, generate structured representations, and determine follow-up actions (108) based on learned correlations.

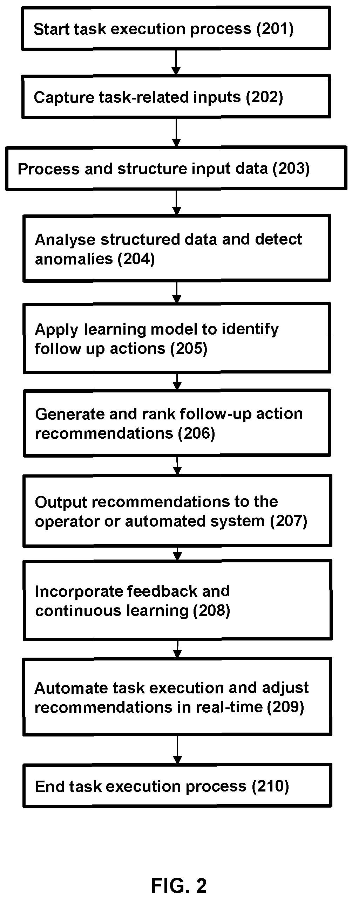

Referring now to Figure 2, a flowchart is illustrated, outlining the step-by-step sequence of operations performed by the system in generating and refining follow-up action recommendations. The process begins with task execution initiation (200), where the system receives task data (101), including details regarding the task type, object or equipment involved, and relevant environmental attributes. During task execution (200), the system captures task-related inputs (202), such as spoken comments (102) made by an operator or robotic system using a speech recognition module (103), while simultaneously acquiring visual data (104) from the task environment using sensors such as cameras, LiDAR, or other environmental monitoring devices. The next stage is to process and structure input data (203), wherein the inputs are processed by a processing unit (140), which integrates the collected task-related data, generating a structured representation (106) that combines classified language-based, equipment-related, and environmental features. The system then analyses the structured representation (204) to detect anomalies (105) in the task environment by identifying deviations from predefined equipment condition thresholds, allowing for early identification of potential issues.

The structured representation (106) is further analysed using the learning model (107), which detects patterns and correlations between task execution data and prior follow-up actions (step (205) in Figure 2). To refine its decision-making process, the system retrieves historical task execution records (130), ensuring that follow-up actions are aligned with past successful outcomes. Based on the analysed data, the follow-up action generation module (108) determines the next steps, and the ranking and confidence score assignment module (109) prioritises these recommendations in step (206), the generation module (108) and or assignment module (109) may be driven by LLM or other GenAl techniques. The ranked follow-up actions are then presented via an output and display module (115, 116, 117), such as augmented reality (AR) interface, heads-up display (HUD), or other visual interface in step (207). At step (208), the system incorporates operator feedback (110), allowing for real-time validation of follow-up actions. If adjustments are needed, the learning model (107) refines its predictive capabilities to improve future recommendations. In parallel, the system may initiate automated workflow (114) to schedule maintenance work orders, dispatch tools, or request regulatory approvals based on validated recommendations. The structured representation is continuously updated with real-time sensor readings (104) and operator inputs (102), ensuring that the system dynamically adapts to changing task conditions (step (209)). The process concludes when the task execution process (210) is completed, with follow-up actions logged for future model refinement and optimisation.

By integrating multiple data sources, continuously refining recommendations, and supporting both human and automated workflows, the present disclosure describes a system and method that improve efficiency, adaptability, and decision-making in task execution processes across various operational environments.

## Claims

1. A computer-implemented method of recommending follow-up actions in a task execution process, the method comprising:
receiving task data (101) comprising a task type and details of an object or equipment associated with the task;
capturing language-based features by processing spoken comments (102) made during execution of the task using a speech recognition module (103);
acquiring visual data of the task environment using one or more sensors (104);
processing the acquired visual data to detect and classify equipment-related and environment-related features (105) associated with the task;
generating a structured representation of the task execution (106) by combining the classified equipment-related and environment-related features with the captured language-based features;
applying a learning model (107) to analyse the structured representation and determine a recommended follow-up action (108) based on learned correlations between prior task execution patterns and follow-up actions; and
outputting the recommended follow-up action (108).

2. The method according to claim 1, wherein the step of capturing language-based features comprises segmenting spoken comments (102) into separate task-related statements and classifying each statement into predefined categories indicative of task actions, conditions, or outcomes.

3. The method according to claim 1 or claim 2, wherein the step of processing the acquired visual data further comprises detecting anomalies in the task environment by identifying deviations from predefined equipment condition thresholds.

4. The method according to any of the preceding claims, wherein the structured representation of the task execution (106) is generated by combining classified features from multiple modalities, the multiple modalities comprising:
language-based features extracted from spoken remarks (102),
equipment-related features extracted from visual data (105), and/or environment-related features extracted from visual data (105).

5. The method according to claim 4, wherein the learning model (107) analyses historical task execution records to identify patterns between the structured representation of the task execution (106) and corresponding prior follow-up actions (108).

6. The method according to claim 5, wherein the learning model (107) is trained using:
supervised learning, wherein historical task execution data and corresponding recorded follow-up actions (108) are used as labelled training data;
and/or
unsupervised learning, wherein clustering is applied to structured representations of task execution patterns
and/or applies LLM or other GenAl techniques to inform follow-up actions (108).

7. The method according to any of the preceding claims, wherein one or more recommended follow-up actions (108) are generated as a ranked list, the ranking being based on confidence scores (109) assigned to each action.

8. The method according to any of the preceding claims, further comprising updating the learning model (107) based on operator feedback regarding the accuracy of a recommended follow-up action (108).

9. The method according to any of the preceding claims, further comprising generating a report (111) of the extracted task execution features, corresponding classification results, and/or the recommended follow-up action (108).

10. The method according to any of the preceding claims, further comprising transmitting the recommended follow-up action (108) to a task management system (112) and/or a remote-control centre (113) for validation, logging, and/or automated execution.

11. The method according to any of the preceding claims, further comprising initiating an automated task management workflow (114) based on the recommended follow-up action (108), the workflow comprising one or more of:
scheduling maintenance work orders,
dispatching necessary tools or equipment, and/or
requesting regulatory approvals.

12. The method according to any of the preceding claims, wherein the recommended follow-up action (108) is adapted based on at least one of:
the operator's skill level,
the complexity of the task, and/or
environmental conditions affecting task execution.

13. The method according to any of the preceding claims, further comprising updating the structured representation of the task execution (106) in real-time as new task-related data, including sensor readings (104) and/or operator inputs, is acquired.

14. The method according to any of the preceding claims, wherein the recommended follow-up action (108) is presented via an augmented reality (AR) display (115), a heads-up display (HUD) (116), and/or another visual interface (117) to assist a user in executing the task in real time.

15. A system configured to recommend follow-up actions in a task execution process, the system comprising:
at least one sensor (104) configured to acquire visual data of a task environment during task execution;
a speech recognition module (103) configured to capture and process spoken comments (102) made during task execution to extract language-based features;
a data storage module (130) configured to store the captured language-based features (102), the visual data acquired by the at least one sensor, (104) and historical task execution records; and
a processor (140) configured to:
process the visual data acquired by the at least one sensor (104) to detect and classify equipment-related and environment-related features (105) relevant to the task;
generate a structured representation of the task execution (106) by combining the classified equipment-related and environment-related features (105) with the captured language-based features;
apply a learning model (107) trained using historical task execution records stored in the data storage module (130) to analyse the structured representation (106) and determine a recommended follow-up action (108) based on learned correlations between prior task execution patterns and follow-up actions (108); and
output the recommended follow-up action (108).
